# EUROPÄISCHE PATENTSCHRIFT

(11) **EP 3 593 218 B1**
(45) Veröffentlichungstag und Bekanntmachung des Hinweises auf die Patenterteilung: **29.12.2021**
(21) Anmeldenummer: 18701741.3
(22) Anmeldetag: 24.01.2018
(51) Int. Cl.: G05D 1/02, G08G 1/14, G08B 27/00

(54) **VERFAHREN ZUM BETRIEB EINER PARKUMGEBUNG BEI ALARMZUSTÄNDEN UND AUTONOMES KRAFTFAHRZEUG MIT EINEM STEUERUNGSSYSTEM ZUR FÜHRUNG DES VERFAHRENS**
METHOD FOR OPERATING A PARKING ENVIRONMENT UNDER ALARM STATES AND AUTONOMOUS MOTOR VEHICLE WITH A CONTROL SYSTEM FOR EXECUTING THE METHOD
PROCÉDÉ POUR EXPLOITER UN PARC DE STATIONNEMENT EN CAS D'ALARMES ET VÉHICULE AUTOMOBILE AUTONOME ÉQUIPÉ D'UN SYSTÈME DE COMMANDE POUR EXÉCUTER LE PROCÉDÉ

(30) Priorität: 10.03.2017 DE 102017203981
(43) Veröffentlichungstag der Anmeldung: 15.01.2020
(73) Patentinhaber: Audi AG, 85045 Ingolstadt (DE)
(72) Erfinder: BADOUIN, David Alexander, 85049 Ingolstadt (DE); FEIST, Christian, 85049 Ingolstadt (DE)
(86) Internationale Anmeldenummer: PCT/EP2018/051710
(87) Internationale Veröffentlichungsnummer: WO 2018/162142

(56) Entgegenhaltungen:
- DE-A1-102015 208 053
- US-A1- 2014 046 506

## Beschreibung

Die Erfindung betrifft ein Verfahren zum Betrieb einer Parkumgebung mit wenigstens einem ein zur vollständig automatischen Fahrzeugführung ausgebildetes Fahrzeugsystem aufweisenden, autonom für Parkzwecke in der Parkumgebung betriebenen Kraftfahrzeug, wobei der Parkumgebung eine kraftfahrzeugexterne Steuereinrichtung zugeordnet ist, die zum Aufbau einer drahtlosen Kommunikationsverbindung zu in der Parkumgebung autonom betriebenen Kraftfahrzeugen und zur Koordination des autonomen Betriebs der Kraftfahrzeuge in der Parkumgebung ausgebildet ist. Daneben betrifft die Erfindung ein Kraftfahrzeug.

Die Unterstützung und Automatisierung des Parkens in Parkumgebungen ist im Stand der Technik bereits vielfältig diskutiert worden. Insbesondere wurde es vorgeschlagen, Parkumgebungen Steuereinrichtungen, beispielsweise zentrale Server, zuzuordnen, die Kommunikationsverbindungen zu in der Parkumgebung befindlichen Kraftfahrzeugen herstellen können. Über diese Kommunikationsverbindung können eine Vielzahl von Informationen ausgetauscht werden, insbesondere, um Parkassistenzsysteme oder sonstige Fahrzeugsysteme innerhalb der Kraftfahrzeuge in ihrer Funktion zu unterstützen. Beispielsweise können Zielabstellplätze in der Parkumgebung, Wege zu diesen Zielabstellplätzen, digitale Kartendaten der Parkumgebung und dergleichen an ein Kraftfahrzeug übermittelt werden, damit dieses entweder fahrerseitig gesteuert oder aber zumindest teilweise automatisch geführt seinen Weg zum Zielabstellplatz bzw. von dem Abstellplatz zur Ausfahrt finden kann. Auch die Koordination des Betriebs von Kraftfahrzeugen in der Parkumgebung wurde bereits vorgeschlagen.

Ein wichtiges Thema bei aktuellen Entwicklungen ist das sogenannte Valet-Parken. Dabei können Kraftfahrzeuge, die ein zur vollständig automatischen Fahrzeugführung des Kraftfahrzeugs ausgebildetes Fahrzeugsystem aufweisen, sich letztlich selbst auf einem Zielabstellplatz in der Parkumgebung einparken. Hierzu kann vorgesehen sein, dass der Fahrer sein Kraftfahrzeug in einem Übergabebereich abstellt, von wo das Kraftfahrzeug, über die Kommunikationsverbindung zu der Steuereinrichtung unterstützt, von selbst auf den Zielabstellplatz fährt und sich dort abstellt. Entsprechend kann das Kraftfahrzeug mittels des Fahrzeugsystems auch selbst wieder ausparken und in den oder einen weiteren Übergabebereich zurücküberführt werden.

Ein Beispiel für einen solchen, koordinierten Betrieb von Kraftfahrzeugen innerhalb eines Parkplatzes wird beispielsweise durch DE 10 2014 224 101 A1 beschrieben. Das Koordinieren kann beispielsweise ein Geben einer Vorfahrt an ein autonom fahrendes Fahrzeug vor einem ferngesteuert geführten Fahrzeug umfassen, das bedeutet, insbesondere kann eine annähernd vollständige Fernsteuerung von Fahrzeugen innerhalb des Parkplatzes stattfinden. Auf diese Weise können beispielsweise auch Stoppbefehle zum Stoppen des Fahrzeugs gegeben werden.

Problematisch wird ein vollständig automatischer Betrieb innerhalb einer Parkumgebung, insbesondere innerhalb eines Parkhauses, immer dann, wenn das durch das Fahrzeugsystem zur konkreten Umsetzung der Fahrt zu einem Zielabstellplatz und/oder einem Übergabebereich betriebene oder abgestellte Kraftfahrzeug in einen Alarmzustand gerät. Alarmzustände in Parkumgebungen werden üblicherweise optisch und/oder akustisch, beispielsweise durch Warnleuchten, Lautsprecher und dergleichen, ausgegeben. Nimmt ein Fahrer den entsprechenden Alarm wahr, kann er entsprechend reagieren. Ist jedoch der Fahrer in einer hochautomatisierten und fahrerlosen Fahrfunktion nicht im Kraftfahrzeug, kann er den Alarm nicht wahrnehmen und auch nicht reagieren.

DE 10 2015 208 053 A1 betrifft ein Verfahren und eine Vorrichtung zum Verringern einer Gefährdung für ein und/oder durch ein sich auf einem Parkplatz befindendes Fahrzeug. Dabei wird zunächst eine Kommunikationsverbindung zwischen einem sich beispielsweise autonom auf einem Parkplatz bewegenden Kraftfahrzeug und einem Parkplatzverwaltungssystem durch eine Überprüfungseinrichtung überprüft. Für den Fall, dass eine Störung der Kommunikationsverbindung vorliegt, kann beispielsweise als Maßnahme vorgesehen sein, dass das Kraftfahrzeug anhält, dass ein Warnsignal von dem Kraftfahrzeug ausgesandt wird oder dass eine Warnung an das Parkplatzverwaltungssystem und/oder ein weiteres Fahrzeug auf dem Parkplatz gesendet wird.

US 2014/046506 A1 betrifft ein Verfahren zum autonomen Bewegen eines Fahrzeugs in einer Parkumgebung. Eine stationäre Steuerungseinrichtung wird zum Steuern des Einparkvorgangs eines Kraftfahrzeugs auf dem Parkplatz vorgesehen. Von fahrzeugseitigen Sensoren zur Erfassung einer bevorstehenden Kollision des Kraftfahrzeugs erfasste Daten werden an die fahrzeugexterne Steuerungseinrichtung übertragen, die dazu eingerichtet ist, eine situationsabhängige Maßnahme als Reaktion hierauf einzuleiten. Derartige Maßnahmen können beispielsweise das Aussenden eines Warnsignals oder ein Abbremsen sein.

Der Erfindung liegt daher die Aufgabe zugrunde, eine erhöhte Sicherheit in Parkumgebungen, insbesondere im Hinblick auf Alarmzustände, zu erreichen.

Zur Lösung dieser Aufgabe ist einem Verfahren der eingangs genannten Art erfindungsgemäß vorgesehen, dass bei Vorliegen eines einen Alarmzustand in der Parkumgebung anzeigenden Alarmsignals, welches insbesondere akustisch und/oder optisch über Anzeigemittel der Parkumgebung ausgegeben wird, über die oder eine weitere drahtlose Kommunikationsverbindung eine die Art des Alarms beschreibende Alarminformation von der Steuereinrichtung an alle in der Parkumgebung befindlichen, autonom betriebenen Kraftfahrzeuge übermittelt wird, wo die Fahrzeugsysteme der die Alarminformationen empfangenden Kraftfahrzeuge diese mittels wenigstens eines Maßnahmenkriteriums auswerten, wobei bei Erfüllung des Maßnahmenkriteriums wenigstens eine alarmbezogene, eine Gefährdung aufgrund des Alarms beseitigende oder reduzierende Maßnahme automatisch durchgeführt wird.

Erfindungsgemäß wird mithin vorgeschlagen, das Kraftfahrzeug über den Alarmzustand zu informieren, indem eine ohnehin bestehende Kommunikationsverbindung genutzt wird oder eine spezielle Kommunikationsverbindung zwischen der Steuereinrichtung der Parkumgebung und dem Kraftfahrzeug aufgebaut wird. Bei der Kommunikationsverbindung handelt es sich insbesondere um eine Funkverbindung. In vielen Fällen besteht eine geeignete Kommunikationsverbindung bereits permanent, während sich das hochautomatisierte Kraftfahrzeug in der Parkumgebung befindet, um mit der Steuereinrichtung Informationen auszutauschen. Wird nun ein Alarm ausgelöst und liegt der Steuereinrichtung das entsprechende Alarmsignal vor, werden nicht nur bevorzugt akustische und/oder optische Anzeigemittel der Parkumgebung zur Ausgabe des Alarms angesteuert, sondern dem Kraftfahrzeug wird über die Kommunikationsverbindung eine Alarminformation übertragen, damit das Kraftfahrzeug entsprechend der gesetzlichen Bestimmungen und/oder mit bestmöglichem Verhalten auf den Alarmzustand reagieren kann. Mit anderen Worten wird es also dem Kraftfahrzeug, insbesondere dem zur vollautomatischen Führung des Kraftfahrzeugs ausgebildeten Fahrzeugsystem, überlassen, adäquat im Rahmen des autonomen Betriebs auf die Alarminformation so zu reagieren, dass eine Reduzierung der Gefährdung für das Kraftfahrzeug und/oder die Parkumgebung und/oder innerhalb der Parkumgebung befindliche weitere Kraftfahrzeuge und/oder Personen entsteht. Die Maßnahme wird also innerhalb des Kraftfahrzeugs durch Auswertung des Maßnahmenkriteriums bestimmt.

In einer konkreten Ausgestaltung kann vorgesehen sein, dass bei einer einen Kohlendioxidalarm und/oder einen Kohlenmonoxidalarm beschreibenden Alarminformation als Maßnahme ein laufender Verbrennungsmotor abgeschaltet wird. Liegt also, insbesondere in einem Parkhaus als Parkumgebung, ein Kohlenmonoxid- und/oder Kohlendioxidalarm vor, ist es zweckmäßig, Verbrennungsmotoren abzustellen. Hierzu können sich Kraftfahrzeuge letztlich selbst entscheiden. Dabei sieht eine besonders vorteilhafte Weiterbildung vor, dass bei einem mit einem Elektromotor ausgestatteten Kraftfahrzeug und einem während des Alarms durchzuführenden Fahrbetrieb dieser mittels des Elektromotors durchgeführt wird. Nachdem mithin ein Elektromotor keine weiteren Kohlendioxid- und/oder Kohlenmonoxidemissionen verursachen würde, ist es bei Kraftfahrzeugen mit einem Elektromotor durchaus denkbar, einen weiteren Betrieb vorzusehen. Hierdurch ergibt sich bereits ein deutlicher Vorteil der Maßnahmenbildung innerhalb des Kraftfahrzeugs, da dort bekannt ist, welche Ausstattung das Kraftfahrzeug selber aufweist und somit optimal auf den Alarmzustand reagiert werden kann, ohne "Pauschalanweisungen" seitens der Steuereinrichtung zu benötigen, die zu einer suboptimalen Reaktion führen könnten.

Eine weitere konkrete Ausgestaltung der vorliegenden Erfindung sieht vor, dass bei einer einen auf einen Teilbereich der Parkumgebung, insbesondere ein Stockwerk eines Parkhauses bezogenen, Kraftfahrzeuge in dem Teilbereich gefährdenden und/oder den Teilbereich bei anwesenden Kraftfahrzeugen gefährdenden Alarm beschreibenden Alarminformation als Maßnahmen bei einem im Teilbereich befindlichen Kraftfahrzeug ein eine Räumung des Teilbereichs bewirkender Fahrbetrieb und/oder bei einem außerhalb des Teilbereichs im Fahrbetrieb befindlichen Kraftfahrzeug ein Umfahren des Teilbereichs vorgenommen wird. Bei einem solchen Alarm kann es sich beispielsweise um einen Hochwasseralarm handeln. Ist beispielsweise die unterste Etage eines Parkhauses als Parkumgebung von Hochwasser bedroht, kann die Steuereinrichtung den entsprechenden Hochwasseralarm weitergeben, woraufhin eine automatische Evakuierung durch die Kraftfahrzeuge selbst gestartet wird bzw. das entsprechende Stockwerk von anderen Kraftfahrzeugen gemieden werden kann.

Ferner ist es im Rahmen der vorliegenden Erfindung auch denkbar, dass bei einer einen einen Rettungseinsatz bedingenden Alarm anzeigenden Alarminformation als Maßnahme in wenigstens einem einen Rettungsweg blockierenden Kraftfahrzeug der Rettungsweg geräumt wird. Ist es beispielsweise dringend notwendig, dass die Feuerwehr und/oder ein Rettungswagen eine bestimmte Stelle innerhalb der Parkumgebung erreichen, können Kraftfahrzeuge, welche die Alarminformation erhalten, Rettungswege entsprechend freihalten. Rettungswege können beispielsweise im digitalen Kartenmaterial der Parkumgebung, welches das Kraftfahrzeug bereits erhalten hat, gekennzeichnet sein.

In einer Weiterbildung der Erfindung kann vorgesehen sein, dass eine konkret durchzuführende Maßnahme bei Erfüllung eines Maßnahmenkriteriums in Abhängigkeit einer den aktuellen Aufenthaltsstaat des Kraftfahrzeugs beschreibenden Staatsinformation und/oder einer Parkumgebungsinformation zur Einhaltung eines geregelten Sollverhaltens bei dem Alarm gewählt wird. Während das Kraftfahrzeug, insbesondere konkret das Fahrzeugsystem, nach den Möglichkeiten des Kraftfahrzeugs selbst den optimalen Weg zur Reduzierung von Gefährdungen durch die Maßnahmen auswählen kann, ist es selbstverständlich dennoch zweckmäßig, gewisse Grundregen zu beachten, die beispielsweise staatlich vorgegeben sind und/oder innerhalb der Parkumgebung, insbesondere des Parkhauses, gelten sollen. Beispielsweise kann ein Grundregelsatz zu Beginn des Betriebs des Kraftfahrzeugs in der Parkumgebung von der Steuereinrichtung an das Kraftfahrzeug übermittelt werden. So können sowohl landesspezifische Bestimmungen, wie mit bestimmten Alarmen umzugehen ist, als auch parkumgebungsspezifische Bestimmungen berücksichtigt werden.

Neben dem Verfahren betrifft die Erfindung auch ein Kraftfahrzeug, aufweisen ein zur vollständig automatischen Führung des Kraftfahrzeugs ausgebildetes Fahrzeugsystem, welches dazu ausgebildet ist, bei Empfang einer eine Art eines Alarms einer aktuell befahrenen Parkumgebung beschreibenden Alarminformation über eine drahtlose Kommunikationsverbindung von einer kraftfahrzeugexternen, der Parkumgebung zugeordneten Steuereinrichtung die Alarminformation mittels wenigstens eines Maßnahmenkriteriums auszuwerten, wobei bei Erfüllung des Maßnahmenkriteriums wenigstens eine alarmbezogene, eine Gefährdung aufgrund des Alarms beseitigende oder reduzierende Maßnahme automatisch durch das Fahrzeugsystem durchgeführt wird. Für das Kraftfahrzeug gelten die bezüglich des Verfahrens dargelegten Ausgestaltungen fort, so dass auch mit diesen die bereits genannten Vorteile erhalten werden können.

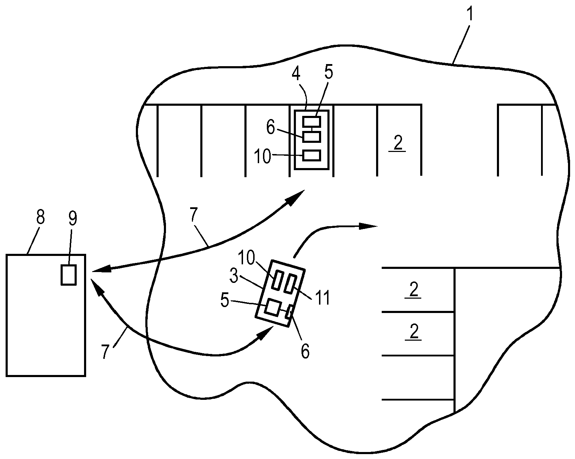

Weitere Vorteile und Einzelheiten der vorliegenden Erfindung ergeben sich aus den im Folgenden dargestellten Ausführungsbeispielen sowie anhand der Zeichnungen. Dabei zeigt die einzige Figur eine Situation in einer Parkumgebung.

Die Figur zeigt einen Ausschnitt 1 einer Parkumgebung, vorliegend ein Stockwerk eines Parkhauses. Die Parkumgebung weist ersichtlich eine Mehrzahl von Abstellplätzen 2 für Kraftfahrzeuge auf, wobei vorliegend beispielhaft nur zwei erfindungsgemäße Kraftfahrzeuge 3, 4 gezeigt sind. Beide Kraftfahrzeuge 3, 4 weisen ein Fahrzeugsystem 5 zur vollständig automatischen Führung des jeweiligen Kraftfahrzeugs 3, 4 sowie eine Kommunikationseinrichtung 6 auf. Über die Kommunikationseinrichtung 6 kann eine Kommunikationsverbindung 7, hier eine Funkverbindung, zu einer der Parkumgebung zugeordneten Steuereinrichtung 8, hier einer zentralen Servereinrichtung, aufgebaut werden, welche eine entsprechende Kommunikationseinrichtung 9 aufweist. Über die Kommunikationsverbindungen 7 können verschiedene, während eines autonomen Betriebs der Kraftfahrzeuge 3, 4 nützliche Informationen, beispielsweise Zielabstellplätze, digitales Kartenmaterial und dergleichen, übertragen werden. Auch die Kraftfahrzeuge 3, 4 können nützliche Informationen an die Steuereinrichtung 8 liefern, beispielsweise, ob sie den Zielabstellplatz erreicht haben und dergleichen.

Liegt ein Alarmzustand in der Parkumgebung vor, existiert auch ein entsprechendes Alarmsignal in der Steuereinrichtung 8, das diese nutzen kann, um beispielsweise hier nicht näher gestellte optische und/oder akustische Anzeigemittel der Parkumgebung anzusteuern. Bei Vorliegen eines Alarmsignals werden jedoch die Kommunikationsverbindungen 7 genutzt (und gegebenenfalls wieder aufgebaut, falls sie zur Zeit nicht bestehen), um den Kraftfahrzeugen 3, 4 eine Alarminformation zu übermitteln, die zumindest den Hinweis enthält, dass ein Alarm vorliegt und welcher Art der Alarm ist. Zweckmäßigerweise kann bei räumlich begrenzten Alarmzuständen auch eine Ortsinformation, die den Bereich der Parkumgebung, für den der Alarmzustand gilt, beschreibt, zugeordnet sein. Auch eine Beendigung des Alarmzustands kann den Kraftfahrzeugen 3, 4 selbstverständlich entsprechend mitgeteilt werden.

Empfangen die Kraftfahrzeuge 3, 4 die Alarminformation, wird diese durch wenigstens ein entsprechendes Maßnahmenkriterium ausgewertet. Ist das Maßnahmenkriterium erfüllt, wird die wenigstens eine entsprechende, dem Maßnahmenkriterium zugeordnete Maßnahme durchgeführt. Konkret bedeutet das einen, falls notwendig, Betrieb des Kraftfahrzeugs 3, 4, um die Gefährdung für das Kraftfahrzeug und die Umgebung möglichst zu reduzieren, wobei die Kraftfahrzeuge 3, 4 selber entsprechend entscheiden können, welches die optimale Vorgehensweise ist, nachdem das Wissen über ihre Ausstattung ja in ihnen vorliegt.

Zeigt die Alarminformation beispielsweise an, dass ein Kohlenmonoxid- oder Kohlendioxidalarm vorliegt, während das Kraftfahrzeug 3 gerade in Richtung des Zielabstellplatzes unterwegs ist, wird im Kraftfahrzeug 3 der Verbrennungsmotor 10 deaktiviert. Dennoch kann das Kraftfahrzeug 3 weiter betrieben werden, nachdem es auch einen Elektromotor 11 aufweist, dessen Betrieb dem Alarm nicht entgegensteht. Wäre das lediglich mit einem Verbrennungsmotor 10 ausgestattete Kraftfahrzeug 4 gerade im Begriff gewesen, beispielsweise in einen Übergabebereich loszufahren, kann der Verbrennungsmotor wieder deaktiviert werden und das Kraftfahrzeug 4 kann abwarten, bis der Alarmzustand beendet ist.

Umfasst die Alarminformation beispielsweise einen Feuer- oder Hochwasseralarm, der sich auf ein bestimmtes Stockwerk bezieht, können die Maßnahmen einen Fahrbetrieb zur Evakuierung und/oder zum Umfahren des entsprechenden Stockwerks umfassen. Beispielsweise kann ein abgestelltes Kraftfahrzeug 4 das entsprechende Stockwerk automatisch gesteuert durch das Fahrzeugsystem 5 verlassen, um es zu räumen. Andere Maßnahmen können auch das Freihalten von Rettungswegen umfassen.

Hierbei können bei den Maßnahmenkriterium auch Sollverhaltensregeln berücksichtigt werden, die beispielsweise auf den aktuell befahrenen Staat bezogene Staatsinformationen und/oder auf die aktuell befahrene Parkumgebung bezogene Parkumgebungsinformationen umfassen, um korrekt innerhalb der Regeln, falls existent, auf Alarminformationen reagieren zu können.

## Patentansprüche

1. Verfahren zum Betrieb einer Parkumgebung mit wenigstens einem ein zur vollständig automatischen Fahrzeugführung ausgebildetes Fahrzeugsystem (5) aufweisenden, autonom für Parkzwecke in der Parkumgebung betriebenen Kraftfahrzeug (3,4), wobei der Parkumgebung eine kraftfahrzeugexterne Steuereinrichtung (8) zugeordnet ist, die zum Aufbau einer drahtlosen Kommunikationsverbindung (7) zu in der Parkumgebung autonom betriebenen Kraftfahrzeugen (3,4) und zur Koordination des autonomen Betriebs der Kraftfahrzeuge (3,4) in der Parkumgebung ausgebildet ist, wobei bei Vorliegen eines einen Alarmzustand in der Parkumgebung anzeigenden Alarmsignals, welches insbesondere akustisch und/oder optisch über Anzeigemittel der Parkumgebung ausgegeben wird, über die oder eine weitere drahtlose Kommunikationsverbindung (7) eine die Art des Alarms beschreibende Alarminformation an alle in der Parkumgebung befindlichen, autonom betriebenen Kraftfahrzeuge (3,4) übermittelt wird, wobei die Fahrzeugsysteme (5) der die Alarminformationen empfangenden Kraftfahrzeuge (3,4) diese mittels wenigstens eines Maßnahmenkriteriums auswerten, wobei bei Erfüllung des Maßnahmenkriteriums wenigstens eine alarmbezogene, eine Gefährdung aufgrund des Alarms beseitigende oder reduzierende Maßnahme automatisch durchgeführt wird.

2. Verfahren nach Anspruch 1,
**dadurch gekennzeichnet,**
**dass** bei einer einen Kohlendioxidalarm und/oder einen Kohlenmonoxidalarm beschreibenden Alarminformation als Maßnahme ein laufender Verbrennungsmotor (10) abgeschaltet wird.

3. Verfahren nach Anspruch 2,
**dadurch gekennzeichnet,**
**dass** bei einem mit einem Elektromotor (11) ausgestatteten Kraftfahrzeug (3,4) und einem während des Alarms durchzuführenden Fahrbetrieb dieser mittels des Elektromotors (11) durchgeführt wird.

4. Verfahren nach einem der vorangehenden Ansprüche,
**dadurch gekennzeichnet,**
**dass** bei einer einen auf einen Teilbereich der Parkumgebung, insbesondere ein Stockwerk eines Parkhauses, bezogenen, Kraftfahrzeuge (3,4) in dem Teilbereich gefährdenden und/oder den Teilbereich bei anwesenden Kraftfahrzeugen (3,4) gefährdenden Alarm beschreibenden Alarminformation als Maßnahme bei einem im Teilbereich befindlichen Kraftfahrzeug (3,4) ein eine Räumung des Teilbereichs bewirkender Fahrbetrieb und/oder bei einem außerhalb des Teilbereichs im Fahrbetrieb befindlichen Kraftfahrzeug (3,4) ein Umfahren des Teilbereichs vorgenommen wird.

5. Verfahren nach einem der vorangehenden Ansprüche,
**dadurch gekennzeichnet,**
**dass** bei einer einen einen Rettungseinsatz bedingenden Alarm anzeigenden Alarminformation als Maßnahme in wenigstens einem einen Rettungsweg blockierenden Kraftfahrzeug (3,4) der Rettungsweg geräumt wird.

6. Verfahren nach einem der vorangehenden Ansprüche,
**dadurch gekennzeichnet,**
**dass** eine konkret durchzuführende Maßnahme bei Erfüllung eines Maßnahmenkriteriums in Abhängigkeit einer den aktuellen Aufenhaltsstaat des Kraftfahrzeugs (3,4) beschreibenden Staatsinformation und/oder einer Parkumgebungsinformation zur Einhaltung eines geregelten Sollverhaltens bei dem Alarm gewählt wird.

7. Kraftfahrzeug (3,4), aufweisend ein zur vollständig automatischen Führung des Kraftfahrzeugs (3,4) ausgebildetes Fahrzeugsystem (5), welches dazu ausgebildet ist, bei Empfang einer eine Art eines Alarms einer aktuell befahrenen Parkumgebung beschreibenden Alarminformation über eine drahtlose Kommunikationsverbindung (7) von einer kraftfahrzeugexternen, der Parkumgebung zugeordneten Steuereinrichtung (8) die Alarminformation mittels wenigstens eines Maßnahmenkriteriums auszuwerten, wobei bei Erfüllung des Maßnahmenkriteriums wenigstens eine alarmbezogene, eine Gefährdung aufgrund des Alarms beseitigende oder reduzierende Maßnahme automatisch durch das Fahrzeugsystem (5) durchgeführt wird.

## Claims

1. Method for operating a parking environment having at least one motor vehicle (3, 4) which comprises a vehicle system (5) designed for fully automatic vehicle guidance and is operated autonomously for parking purposes in the parking environment, wherein the parking environment is assigned a control device (8) which is external to the motor vehicle and is designed to set up a wireless communication connection (7) to motor vehicles (3, 4) which are operated autonomously in the parking environment and to co-ordinate the autonomous operation of the motor vehicles (3, 4) in the parking environment, wherein, when an alarm signal is present which indicates an alarm state in the parking environment and which in particular is emitted acoustically and/or optically via display means of the parking environment, alarm information which describes the type of alarm is transmitted via the same or another wireless communication connection (7) to all autonomously operated motor vehicles (3, 4) located in the parking environment, wherein the vehicle systems (5) of the motor vehicles (3, 4) receiving the alarm information evaluate said information by means of at least one measure criterion, wherein when the measure criterion is met at least one alarm-related measure which eliminates or reduces a hazard due to the alarm is carried out automatically.

2. Method according to claim 1, **characterised in that**,
a running internal combustion engine (10) is switched off in response to alarm information describing a carbon dioxide alarm and/or a carbon monoxide alarm.

3. Method according to claim 2, **characterised in that**,
in the case of a motor vehicle (3, 4) equipped with an electric motor (11) and a driving operation to be carried out during the alarm, this operation is carried out by means of the electric motor (11).

4. Method according to any of the preceding claims, **characterised in that**,
in the case of alarm information describing an alarm which relates to a sub-region of the parking environment, in particular a floor of a parking garage, endangering motor vehicles (3, 4) in the sub-region and/or endangering the sub-region if motor vehicles (3, 4) are present, as a measure in the case of a motor vehicle (3, 4) located in the sub-region, a driving operation which causes the sub-region to be cleared and/or in the case of a motor vehicle (3, 4) located outside the sub-region in driving operation, a bypassing of the sub-region is carried out.

5. Method according to any of the preceding claims, **characterised in that**,
in the event of alarm information indicating an alarm causing a rescue operation, the escape route is cleared as a measure in at least one motor vehicle (3, 4) blocking the escape route.

6. Method according to any of the preceding claims, **characterised in that**,
a specific measure to be carried out if a measure criterion is satisfied is selected depending on state information describing the current state of registration of the motor vehicle (3, 4) and/or parking environment information to comply with a regulated target behaviour in the event of an alarm.

7. Motor vehicle (3, 4), comprising a vehicle system (5) designed for fully automatic guidance of the motor vehicle (3, 4) which is designed to evaluate the alarm information by means of at least one measure criterion when alarm information describing a type of alarm of a currently used parking environment is received via a wireless communication connection (7) from a control device (8), which is external to the motor vehicle and is assigned to the parking environment, wherein at least one alarm-related measure which eliminates or reduces a hazard due to the alarm is automatically carried out by the vehicle system (5) when the measure criterion is satisfied.

## Revendications

1. Procédé servant à exploiter un environnement de stationnement avec au moins un véhicule automobile (3, 4) présentant un système de véhicule (5) réalisé pour guider complètement automatiquement le véhicule, fonctionnant de manière autonome à des fins de stationnement dans l'environnement de stationnement, dans lequel est associé à l'environnement de stationnement un dispositif de commande (8) externe au véhicule automobile qui est réalisé pour établir une liaison de communication sans fil (7) avec des véhicules automobiles (3, 4) fonctionnant de manière autonome dans l'environnement de stationnement et pour coordonner le fonctionnement autonome des véhicules automobiles (3, 4) dans l'environnement de stationnement, dans lequel en présence d'un signal d'alarme indiquant un état d'alarme dans l'environnement de stationnement, lequel est émis en particulier de manière acoustique et/ou optique par l'intermédiaire de moyens d'affichage de l'environnement de stationnement, la liaison de communication sans fil ou une autre liaison de communication sans fil (7) permet de transmettre à tous les véhicules automobiles (3, 4) se trouvant dans l'environnement de stationnement, fonctionnant de manière autonome, une information d'alarme décrivant le type d'alarme, dans lequel les systèmes de véhicule (5) des véhicules automobiles (3, 4) recevant les informations d'alarme évaluent ces dernières au moyen d'au moins un critère de mesure, dans lequel lorsque le critère de mesure est rempli, au moins une mesure liée à l'alarme, supprimant ou réduisant un risque du fait de l'alarme est automatiquement mise en œuvre.

2. Procédé selon la revendication 1,
**caractérisé en ce que**
dans le cas d'une information d'alarme décrivant une alarme au dioxyde de carbone et/ou une alarme au monoxyde de carbone, la mesure consiste à éteindre un moteur à combustion interne en fonctionnement.

3. Procédé selon la revendication 2,
**caractérisé en ce que**
lorsqu'un véhicule automobile (3, 4) est équipé d'un moteur électrique (11) et lorsqu'un roulage doit être effectué pendant l'alarme, ce dernier est effectué au moyen du moteur électrique (11).

4. Procédé selon l'une quelconque des revendications précédentes,
**caractérisé en ce que**
dans le cas d'une information d'alarme décrivant une alarme menaçant des véhicules automobiles (3, 4) dans la zone partielle et/ou menaçant la zone partielle avec des véhicules automobiles (3, 4) présents, se rapportant à une zone partielle de l'environnement de stationnement, en particulier un étage d'un parking, lorsqu'un véhicule automobile (3, 4) se trouve dans la zone partielle, la mesure consiste à entreprendre un roulage provoquant un dégagement de la zone partielle et/ou lorsqu'un véhicule se trouve en roulage à l'extérieur de la zone partielle, la mesure consiste à contourner la zone partielle.

5. Procédé selon l'une quelconque des revendications précédentes,
**caractérisé en ce que**
dans le cas d'une information d'alarme indiquant une alarme impliquant une opération de secours, la mesure consiste à dégager la voie de secours dans au moins un véhicule automobile (3, 4) bloquant une voie de secours.

6. Procédé selon l'une quelconque des revendications précédentes,
**caractérisé en ce que**
une mesure devant être réalisée concrètement pour répondre à un critère de mesure en fonction d'une information d'état décrivant l'état de présence actuel du véhicule automobile (3, 4) et/ou d'une information d'environnement de stationnement pour respecter un comportement cible réglé, est sélectionnée pour l'alarme.

7. Véhicule automobile (3, 4), présentant un système de véhicule (5) réalisé pour guider complètement automatiquement le véhicule automobile (3, 4), lequel est réalisé, en cas de réception d'une information de d'alarme décrivant un type d'une alarme d'un environnement de stationnement actuellement fréquenté, pour évaluer l'information d'alarme au moyen d'au moins un critère de mesure via une liaison de communication sans fil (7) par un dispositif de commande (8), externe au véhicule, associé à l'environnement de stationnement, dans lequel lorsque le critère de mesure est rempli, au moins une mesure liée à l'alarme, supprimant ou réduisant un risque du fait de l'alarme est automatiquement effectuée par le système de véhicule (5).
